# EUROPEAN PATENT APPLICATION

(11) **EP 1 950 545 A2**
(43) Date of publication of application: **30.07.2008**
(21) Application number: 08100542.3
(22) Date of filing: 16.01.2008
(51) Int. Cl.: G01L 3/10

(54) **Villari torque sensor excitation and pickup arrangement for magnetrostrictive shafts**

(30) Priority: 24.01.2007 US 657230
(71) Applicant: Delphi Technologies, Inc., Troy, Michigan 48007 (US)
(72) Inventor: Nehl, Thomas Wolfgang, Shelby Township, MI 48316 (US); Van Steenkiste, Thomas Hubert, Ray, MI 48096 (US); Smith, John R., Birmingham, MI 48009 (US)
(74) Representative: Denton, Michael John

(57) **Abstract**

A torque sensor based on the Villari effect. The sensor uses high frequency alternating magnetic fields and the Villari effect to determine the state of stress/strain inside a magnetostrictive shaft for the purpose of measuring torque. The invention teaches design elements for the sensor and shaft; namely, the desirable magnetic, electric and structural properties for various elements of the sensor.

## Description

### TECHNICAL FIELD

The present invention relates to Villari torque sensor excitation and pickup arrangement for magnetrostrictive shafts.

### BACKGROUND OF THE INVENTION

Applying a magnetic field causes stress that changes the physical properties of a magnetostrictive material. The reverse is also true: applying stress to a magnetostrictive material changes its magnetic properties (e.g., magnetic permeability). This is called the Villari effect.

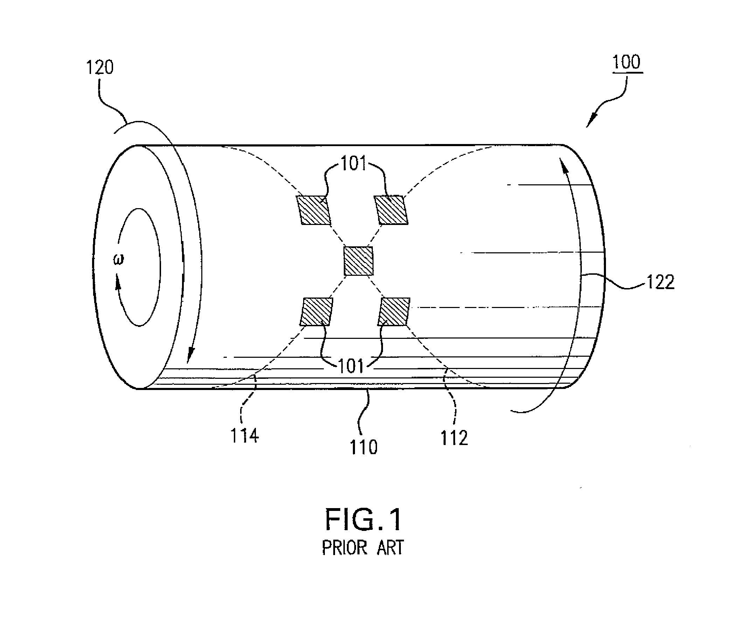

Various materials are known to be magnetostrictive, that is, their permeability µ varies with the amount of stress applied to the material. These materials have been used in various configurations to make force sensors, as described in US Patent Nos. 6,941,824 and 6,993,983. An exemplary configuration measures the inductance of a coil wound around a shaft made of the magnetostrictive material (see Figure 1 of US Patent 6,993,983). Shafts made entirely of a magnetostrictive material, or a non-magnetostrictive shaft with a coating or sleeve of a magnetostrictive material can be used as a torque sensor using the Villari effect as described in W. J. Fleming, "Magnetostrictive Torque Sensors - Derivation of Transducer Model," SAE Paper 890482, pp. 81-100; and W. J. Fleming, "Engine Sensors: State of the Art," SAE Paper 820904 (October 1982). Shafts with cylindrically uniform distribution of magnetostrictive material can be used as torque sensors by comparing changes in the permeability of the magnetostrictive material along the principal axis (compression and tension).

The following literature also provides some background related to the area of technology to which the inventions pertain. T, Schroeder and D. Morelli, Delphi ROI, "Force Sensor and Control Circuit for Same". 2002; and B. Lequesne, D. Morelli, T. Schroeder, T. Nchl, and T. Baudendistcl, Delphi ROI, Universal magnetostrictive force sensor, June 16, 2002.

Figure 1 (Prior Art) is a schematic diagram of a Four-Branch Torque Sensor, generally indicated by reference numeral 100, known in the prior art. Sensor 100 is of the type set forth in the Fleming literature. A shaft 110 is driven by an engine, represented by arrow 120 to drive a load, represented by arrow 122. Shaft 110 is subject to rotation ω due to torque applied to it. Principle stress lines of compression and tension are represented by dashed lines 112 and 114, respectively. Sensor 100 detects changes in inductance along principal axes of the sensor. The four branches each comprise a sensing pole 101 affixed to shaft 110. The four branches are required to force the sensing flux along the principal axes. A disadvantage of this arrangement is that it senses inductance changes within only a portion of the shaft circumference making the measurements more sensitive to circumferential inhomogeneities. Also it is very sensitive to variations in air gap between the four sensing poles and the adjacent points on the shaft.

Fabrication of the sensing coils onto discrete poles of the sensor becomes very difficult for small shaft diameters. Multiple Four-Branch Sensors have been proposed to sense the inductance changes on a larger portion of the shaft circumference simultaneously. See Fleming SAE Paper 890482. However, this multiplies the number of discrete coils (five coils required per four branch section) and hence cost and complexity, especially for small diameter shafts. Sensors with cylindrical excitation and sensing coils are described in W. J. Fleming, "Computer-Model Simulation Results for Three Magnetostrictive Torque Sensor Designs," SAE Paper 910857 (March 1991). However, these do not function with shafts having a cylindrically uniform distribution of magnetostrictive material because the flux is no longer forced to follow the principal axes. A chevron pattern must be added to the magnetostrictive shaft material to force the flux to flow along the principal axes. This has a number of disadvantages including, stress risers along the cuts that impact durability, tighter requirements on the axial play of the shaft (the chevrons must be precisely aligned with the sensor poles) and added manufacturing steps and costs.

### SUMMARY OF THE INVENTION

The inventions described and/or claimed herein relate to novel torque sensor topologies that use high frequency alternating magnetic fields and the Villari effect to determine the state of stress/strain inside a shaft made of a magnetostrictive material for the purpose of measuring torque. The inventions relate to various design elements for the sensor and shaft including but not limited to desirable magnetic, electric and structural properties for various elements of the sensor.

### BRIEF DESCRIPTION OF THE DRAWINGS

Figure 1 (Prior Art) illustrates a prior art arrangement of a Four Branch torque sensor which detects changes in inductance along compression and tension axes of a shaft.

Figure 2 is a schematic diagram of a simple sensor arrangement illustrating a concept of the inventions described and/or claimed herein.

Figure 3 illustrates a sensor arrangement according to the inventions and based on the simple arrangement shown in figure 2. It shows skewed sensor poles straddling cylindrical coil bobbins.

Figure 4 illustrates a bobbin arrangement for a partially constructed sensor according to another embodiment of a sensor according to the inventions;

Figure 5 is a diagram of an assembled sensor based on the bobbin structure shown in Figure 4.

Figures 6 and 7 are idealized cross-sections of sensor arrangement embodiments. Cross-section cuts are taken in the middle of the poles in order to show the flux paths. The two cuts are approximately 45 degrees from one another and are joined together at the interface between two adjacent poles to give a planar representation. Figure 6 corresponds to a torque sensor operating at high frequencies and Figure 7, illustrates a sensor design for low to medium frequencies.

### DESCRIPTION OF THE PREFERRED EMBODIMENT

The inventions described and/or claimed herein are directed to various sensor arrangements having cylindrical excitation and sensing coils that can be used with shafts having a cylindrically uniform distribution of magnetostrictive material without any surface modifications such as chevrons, etc., that force flux along the principal axes.

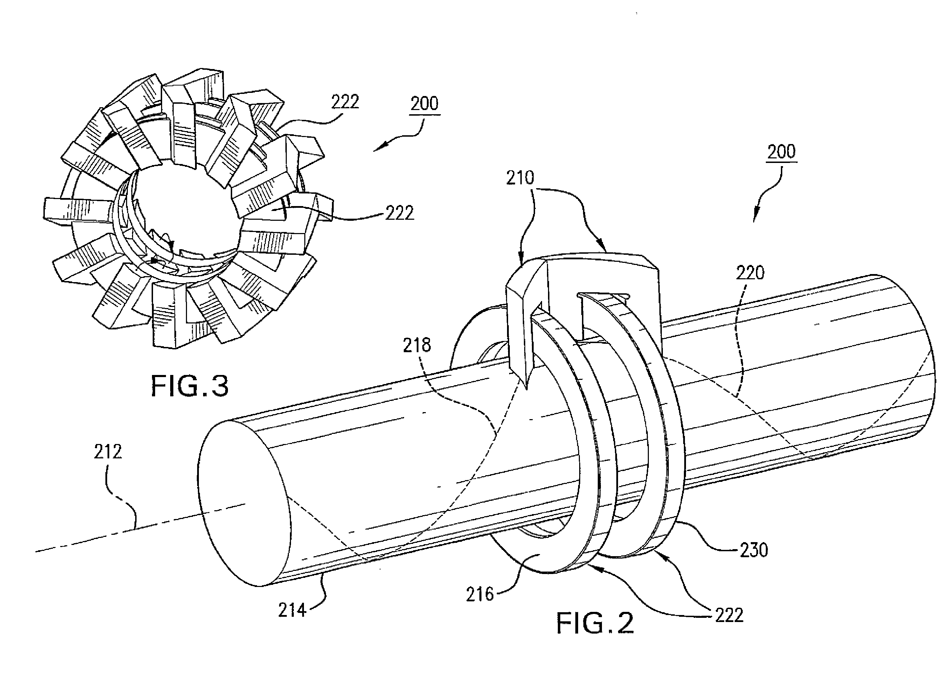

Figure 2 is a schematic diagram of a simple sensor arrangement illustrating a concept of the inventions described and/or claimed herein. A sensor 200 includes skewed sensor pole pieces 210 that straddle cylindrical coil bobbins 222. The sensor has a unique pole structure that forces flux along the principal axes. Discrete pole pieces 210 are skewed with respect to a shaft axis 212 of a shaft 214 and that straddle concentric excitation coils 216 and sensing coils 230, the excitation coils 216 and sensing coils 230 being wound on coil bobbins 222. Each bobbin contains one excitation coil and one sensing coil. One set of poles is aligned with the axis of compression 218 while the other set is aligned with the axis of tension 220. The pole pieces 210 must be fabricated using a soft magnetic material, desirably one with low eddy current and hysteresis losses. For high frequency applications the pole pieces 210 should be made of a ferrite or equivalent low loss type of material. The excitation coils 216 and sensing coils 230 are wound coaxially in two bobbins 222, one for each set of pole pieces 210.

Figure 3 illustrates a sensor arrangement utilizing the principles illustrated in Figure 2. Only the sensor 200 is shown in the figure (shaft 214 is not shown). In the Figure 3 arrangement there are 12 pairs of pole pieces 210. Each pole piece pair straddles two bobbins 222, one containing the excitation coil 216 and the other containing the sensing coil 230. The sensor arrangement can be fitted to a shaft

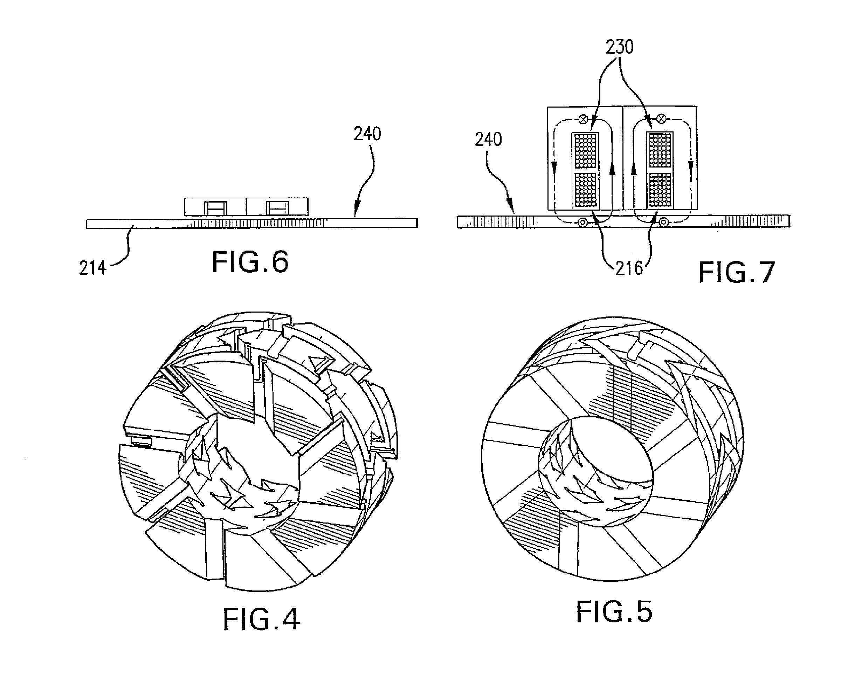

Figure 4 is a perspective view of a partially constructed sensor arrangement. This figure shows a coil bobbin arrangement prepared for the winding of excitation and sensing coils. After the cols are wound, pole pieces 210 are then inserted over the bobbins 222 such that they straddle them as shown. The bobbins 222 can be molded out of a polymer or other suitable non-magnetic and non-conductive material to form a structure into which the coils are wound. The bobbins are fabricated from a non-conducting and non-magnetic material. One example of a suitable material is a polymer.

Figure 5 is a diagram of an assembled sensor based on the arrangement shown in Figure 4. Excitation coils 216 and 230 have been wound on bobbins 222 and pole pieces 210 have been slid into place in the spaces provided by the bobbin configuration. The pole pieces can be fabricated as discrete pieces or they can be formed by injection molding using Soft Magnetic Composite (SMC) or other plastic iron type materials.

Figures 6 and 7 show a axial slices through two different sensor arrangements. In both figures the cuts are taken in the middle of the poles in order to show the flux paths. The two cuts are approximately 45 degrees from one another. These are joined together at the interface between two adjacent poles to give a planar representation.

Figure 6 shows an embodiment of a torque sensor operating at high frequencies (the higher the frequency, the thinner the sensor's radial height). If the frequency is high enough the sensor can be implemented on a flexible substrate (flexible printed circuit).

Figure 7, shows an embodiment of a sensor arrangement for low to medium frequencies. What constitutes low, medium, or high frequency depends on the materials used and fabrication methods but typical numbers would be 1kHz, 10kHz, and above 100kHz, respectively. The required cross-section size shrinks with increasing frequency because the coil voltage is a function of the product of the magnetic flux and electrical frequency. As the frequency goes up the flux (and hence cross-sectional area) can be reduced for a fixed voltage. Moreover, the skin depth of the flux going through the shaft also decreases with increasing frequency, and therefore the pole cross-sectional areas can be reduced without impacting the sensor output.

For the Figure 6 and Figure 7 embodiments, the assembled sensor would be slipped over shaft 214 having a suitable magnetostrictive material on its surface such that it responds via the Villari effect when subjected to torque. The excitation coils 216 and sensing coils 230 are connected to external circuitry in a known manner, such as described in the Fleming literature cited in the BACKGROUND section of this document.

A view along an axial slice of the sensor is shown in Figures 6 and 7 showing the flux paths and the coil layout. For very high frequency operation, the skin depth in the surface 240 of shaft 214 will be very small and therefore the total flux small. Under these conditions the cross-sectional area of the poles can be significantly reduced resulting in the low profile package shown in Figure 6.

Alternative embodiments are possible depending upon fabrication techniques used and the intended frequency of operation. For increasing excitation frequency, the number of turns in the coils would approach one and the thickness of the poles would decrease to a point where thick film techniques could be used to deposit the coils followed by the poles onto a flexible substrate. This sensor with its flexible substrate would be mounted on a suitable structure surrounding the magnetostrictive shaft. For any of the embodiments described herein, the two halves of the sensor (one for each of the two principal axes) can be located adjacent to each other, as in Figure 2, or separated by a fixed distance along the axial direction of the shaft. Other configurations that force the flux to flow along the principal axes of a uniform magnetostrictive shaft and having coaxial excitation and sensing coils are possible by someone skilled in the art.

## Claims

1. A torque sensor, comprising:
a cylindrical excitation coil;
a cylindrical sensing coil concentric with the excitation coil;
a shaft having a cylindrical uniform distribution of magnetostrictive material;
discrete pole pieces made of soft magnetic material and are positioned such that they are skewed with respect to an axis of the shaft and straddle the excitation and sensing coils;
wherein first set of pole pieces is aligned with an axis of compression and a second set of poles is aligned with an axis of tension.

2. A sensor according to claim 1 wherein the pole pieces are made of a low loss soft magnetic material.

3. A sensor according to claim 2 wherein the pole pies are formed by injection molding.

4. A sensor according to claim 2 wherein the pole pieces are formed by hot pressing them into a predetermined shape.

5. A sensor according to claim 2 wherein the pole pieces comprise a plastic iron material.

6. A sensor according to claim 2 wherein the pole pieces comprise a soft magnetic composite material.

7. A sensor according to claim 1 wherein the pole pieces are made of ferrite.

8. A sensor according to claim 1 further comprising bobbins on which are wound the excitation and sensing coils.

9. A sensor according to claim 8 wherein a bobbin is associated with each set of pole pieces.

10. A sensor according to claim 8 wherein the bobbin is made of a polymer.

11. A sensor according to claim 8 wherein the bobbin is made of a non-conducting and non-magnetic material.

12. A sensor according to claim 8 wherein the bobbin and poles are constructed and arranged such that poles can be inserted over the bobbin so as to straddle it.

13. A sensor according to claim 8 wherein two or more bobbins are provided and the bobbins are adjacent to each other along an axial direction of the shaft.

14. A sensor according to claim 8 wherein two or more bobbins are provided and the bobbins are separated from each other by a predetermined distance along an axial direction of the shaft.
